# EUROPEAN PATENT APPLICATION

(11) **EP 2 827 535 A1**
(43) Date of publication of application: **21.01.2015**
(21) Application number: 13306029.3
(22) Date of filing: 17.07.2013
(51) Int. Cl.: H04L 12/26, H04L 12/24, H04L 29/06, G06F 17/30

(54) **Method for isolated anomaly detection in large-scale audio/video/data processing systems**

(71) Applicant: Thomson Licensing, 92130 Issy-les-Moulineaux (FR); INRIA - Institut National de Recherche en Informatique et en Automatique, 78150 Le Chesnay (FR)
(72) Inventor: Le Merrer, Erwan, 35576 Cesson-Sévigné (FR); Ludinard, Romaric, 35042 Rennes (FR); Sericola, Bruno, 35042 Rennes (FR)
(74) Representative: Perrot, Sébastien

(57) **Abstract**

The present invention is related to detection of isolated anomalies, and operates in an automatic manner, without resulting in overloading an anomaly management system in case of large-scale anomalies occurring and that does not rely on user intervention.

## Description

### 1. Field of invention.

The present invention generally relates to large-scale audio/video/data processing systems, where many (e.g. thousands, millions) of end devices process audio, video, and/or data to provide audio, video, and data services. In particular, the technical field of the present invention is related to the detection of isolated anomalies in such large-scale audio/video/data processing systems.

### 2. Technical background.

An example of a large-scale audio/video/data processing system in the context of the invention, is a triple-play audio, video, and data service providing system, where television, Internet, and telephony services are provided to millions of subscribers having end devices. In order to detect anomalies in a Quality of Service (QoS) of the triple-play services enjoyed by the operators' millions of clients, centralized error detection servers that are part of an anomaly detection system monitor the audio/video/data processing end devices. Here, isolated anomaly detection is problematic. This is because the anomaly management system, due to the millions of audio/video/data processing end devices that are connected to it, must protect itself against overload that can occur when the system enables individual message transmission from the audio/video/data data processing devices to the anomaly management system. If for example a communication path goes down for any reason, the thousands or millions of data processing end devices that are served or that intercommunicate at least partly through this communication path, will experience a sudden decrease of QoS (Quality of Service), and will massively send error messages to the anomaly management system. The anomaly management system is then not able to cope with the mass of messages arriving in a very short time period. For these large-scale audio/video/data processing systems, operators thus tend to limit the very possibility for end devices to transmit error messages to the anomaly management system. Remote management techniques exist such as TR-069 or SNMP (Simple Network Management Protocol) protocols. These protocols are server-client oriented, i.e. a server remotely manages many audio/video/data processing end devices. By essence, this centralized remote management architecture does not scale to millions of audio/video/data processing end devices as a single server cannot efficiently monitor such a huge device set. According to prior art, a different monitoring architecture is thus put into place where the monitoring system frequently monitors some audio/video/data processing end devices in distribution paths of the service distribution network topology, to verify if the end devices continue to function correctly. Evidently, this protection barrier against overloading the anomaly management system makes any fine grain anomaly detection impossible. Then, anomaly detection on an individual basis has become impossible.

When an anomaly occurs, the anomaly may impact a significant number of end devices that experience the same anomaly, or be due to a local problem involving only a small set of end devices or a single device. Though the service operator will logically tend to give priority to the detection of anomalies that impact a large number of end devices, for the subscriber who experiences an isolated decrease of QoS, this is a very unsatisfying situation. That subscriber must take the initiative to try to contact the service operator help desk. The help desk operator can instruct the user to try different manipulations, such as return to factory settings and device reboot. If after a number of trials the user's service reception is still in error, a maintenance technician can intervene at the user's premises as a last resort. Such a procedure is annoying for the subscriber, which has to take himself actions to try to solve the problem. In the other end, isolated anomalies may even remain undetected by a subscriber, but may be a precursor of further, more important problems, in which case it may be useful to be able to detect such problems before the subscriber becomes aware of the malfunctioning. Though isolated problems can be considered minor from a technical point of view, isolated problems have a larger scale dimension. Unsatisfied and frustrated subscribers can have an unwanted negative effect on an operator's reputation.

For large-scale audio/video/data processing systems, there is thus a need for a better solution of detection of anomalies experienced by end devices, that allows a proactive detection of isolated anomalies, and that does not rely on user intervention.

### 3. Summary of the invention.

The present invention aims at alleviating some of the inconveniences of prior art.

In the following, the term "point" is used, meaning a spatial object with coordinates (P1, P2) for two dimensions (P1, P2, ..,Pn for n dimensions), for insertion into a spatial access data structure, where (P1, P2) at t_i and (P1, P2) at t_i+j each represents a set of values of quality metrics parameters measured at two different instants of time in a time slot of duration n.

In the following, the term "quality metrics" refers to a general term that concern metrics to define quality of audio/video/data services and comprises quality of service (QoS), quality of experience (QoE), Mean Opinion Score (MOS), Perceptual Speech Quality Measure (PSQM) or Perceptual Evaluation of Video Quality (PEVQ). This quality metrics can be multidimensional e.g. being an aggregation of multiple quality metrics, for example P1 representing a quality metrics value of a number of lost packets, while P2 represents a quality metrics value of a number of decoding errors. Measurement (P1, P2) at t_i then represents a set of quality metrics values comprising the number of lost packets and the value of a number of decoding errors at a moment in time t_i, while measurement (P1, P2) at t_i+j represents a set of quality metrics values comprising a number of lost packets and a value of a number of decoding errors at a moment in time t_i+j as will also be further explained.

The present invention comprises a method of detection of isolated anomaly in a plurality of data processing devices connected in a network, **characterized in that** the method comprises a step of starting a time slot; a step of ending the time slot after a predetermined duration; a step of receiving anomaly messages from the data processing devices comprising a first measurement of a set of quality metrics parameters P1 to Pn measured at a first instant within the time slot and a second measurement of the set of quality metrics parameters P1 to Pn measured at a second instant within the time slot, the data processing devices transmitting the anomaly messages when a difference between the first measurement and the second measurement exceeds a predetermined threshold m; a step of inserting the first measurement and the second measurement in a spatial access data structure, whereby P1 to Pn are spatial coordinates of insertion of the measurements as spatial objects in the spatial access data structure; and a step of upon time slot end, detection of isolated anomalies through classification (75) of the spatial objects inserted in the spatial access structure according to their spatial distribution.

According to a variant embodiment of the method of the invention, the spatial access data structure is an rtree, and the insertion of a spatial object comprises a step of starting at a root of the rtree, to find a leaf node that covers a spatial area where the spatial object is to be inserted; a step of, upon insertion of the spatial object in the leaf node found, computing of a convex hull that comprises spatial objects already present in the leaf node found, and that includes the spatial object to insert; and if the computed convex hull does not fit in a ball with a predetermined radius R, creation of a new ball for the spatial object to insert, having as a center the spatial object to insert; and if a number of balls in the leaf node found exceeds a predetermined number of balls per node, splitting of the leaf node found in two leaf nodes, so that each of the two leaf nodes covers a spatial area that comprises a number of balls that does not exceed the predetermined number of balls per node.

According to a variant embodiment of the method of the invention, the step of detection of isolated anomalies comprises: determining, for each leaf node, if there are balls in the leaf node that are not overlapping; and for any non-overlapping ball that contains less or equal than a predetermined number T of spatial objects, any spatial object in the non-overlapping ball corresponds to an isolated anomaly.

According to a variant embodiment of the method of the invention, the step of detection of isolated anomalies comprises determining, for each leaf node, if there are balls in the leaf node that are overlapping; and for any ball belonging to a group constituted by overlapping balls) that contains less or equal than a predetermined number T of spatial objects, any spatial object in the ball corresponds to an isolated anomaly.

According to a variant embodiment of the method of the invention, the method further comprises a step of deletion of the constructed spatial access data structure after the detection of isolated anomalies.

According to a variant embodiment of the method of the invention, the method further comprises a step of transmitting a report to a maintenance server or to an operator, resuming any detected isolated anomalies.

According to a variant embodiment of the method of the invention, the threshold m is determined as a function of a type of a service for which the set of quality metrics parameters is determined.

According to a variant embodiment of the method of the invention, the radius R is determined as a function of a type of a service for which the set of quality metrics parameters is determined.

According to a variant embodiment of the method of the invention, the first and the second instant within the time slot is determined by each of the data processing devices based on a common clock shared between the data processing devices and a device implementing the method.

According to a variant embodiment of the method of the invention, the spatial access data structure is an R*-tree.

According to a variant embodiment of the method of the invention, the spatial access data structure is an X-tree.

The invention also concerns a device for detection of isolated anomaly in a plurality of data processing devices connected in a network, the device comprising a timing module for starting a time slot and for ending the time slot; an input/output interface for receiving anomaly messages from the data processing devices comprising a first measurement of a set of quality metrics parameters P1 to Pn measured at a first instant within the time slot and a second measurement of the set of quality metrics parameters P1 to Pn measured at a second instant within the time slot, the data processing devices transmitting the anomaly messages when a difference between the first measurement and the second measurement exceeds a predetermined threshold m; an inserter for inserting the first measurement and the second measurement in a spatial access data structure, whereby P1 to Pn are spatial coordinates of insertion of the measurements as spatial objects in the spatial access data structure; and an anomaly classifier module for detection upon time slot end, of isolated anomalies through classification of the spatial objects inserted into the spatial access structure according to their spatial distribution.

### 4. List of figures.

More advantages of the invention will appear through the description of particular, non-restricting embodiments of the invention.

The embodiments will be described with reference to the following figures:
Figure 1 is an example network topology of a large-scale data processing system according to a particular, non limiting embodiment of the invention.
Figure 2 is an illustration of a monitoring of quality metrics, executed individually by devices that are part of an audio/video/data processing system, such as for example by devices 10, 11 or 12 of figure 1.
Figure 3 is a visual representation of quality metrics evolution.
Figures 4a and b further illustrate how the R-tree is constructed from the incoming anomaly messages.
Figures 5a, 5b and 5c illustrate an evolution a leaf node in the R-tree structure.
Figure 6 shows a device 600 that can be used in a system that implements the method of the invention.
Figure 7 shows a particular embodiment of the method according to the invention in the form of a flow chart.

### 5. Detailed description of the invention.

In the present document, the term 'audio/video/data' is used, meaning audio only, video only, and data only, or any combination of these. In the present document, the term 'anomaly detection' is used rather than 'error detection'. This is done on purpose. Indeed, an anomaly is considered as an 'abnormal' change in quality metrics. Such an anomaly can either be positive (improved quality metrics) or negative (degraded quality metrics) and is thus distinguished from 'error'. Anomaly detection can be interesting for error detection but also for detection of a better quality metrics, for example during troubleshooting; if an isolated anomaly is detected due to a negative change in quality metrics, it is expected that after having applied measures that would remove its cause, an isolated anomaly would be detected due to a positive change in quality metrics. In the following, the term 'end device' is used. This term can indicate, but is not limited to, a digital receiver device, such as a Set Top Box, digital radio or television, a personal computer, a mobile telephone, a tablet, but also a gateway for distribution of audio/video/data services to multiple devices.

For audio/video/data processing systems, communication complexity towards the anomaly management system is key to scalability. As has been discussed in the technical background section of this document, prior art sacrifices fine-grain anomaly detection in order to allow large-scale anomaly detection, because the anomaly monitoring system is unable to handle anomaly messages from many devices at the same time. Also, the anomaly detection often remains contained to a detection of negative anomalies only. The invention therefore defines a solution for isolated anomaly detection that scales particularly well to use in large scale data processing systems where thousands or even millions of end devices provide one or more data processing services. The objective of the current invention is to reduce alarm reporting to cases where a quality metrics degradation/improvement is assessed as being particular to a limited set of end devices, or to a single device. To this end, the invention proposes a self-organizing method, device and system for anomaly detection that is suited for any scale audio/video/data processing system, including large or very large scale.

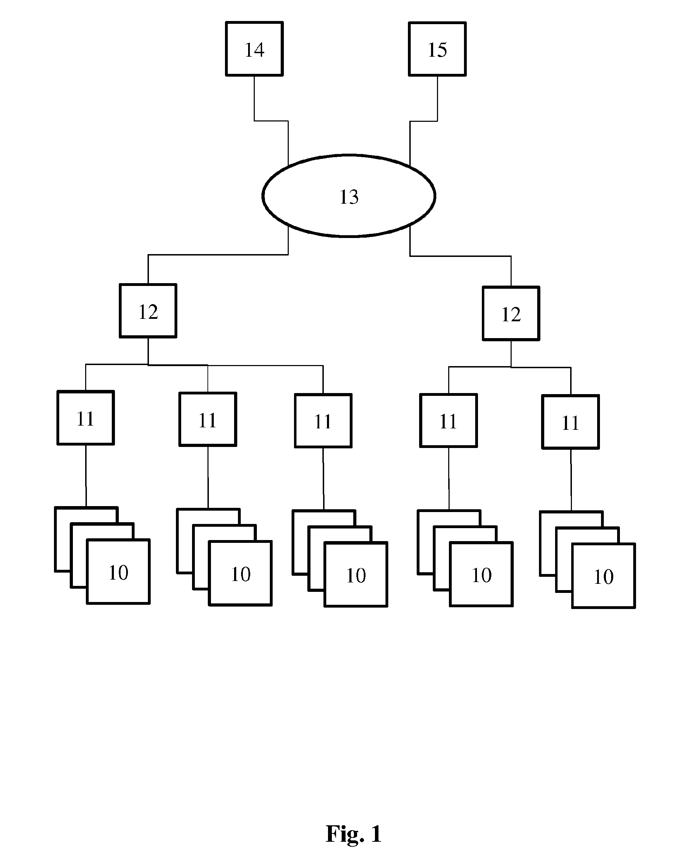

**Figure 1** is an example network topology of a large-scale data processing system according to a particular, non limiting embodiment of the invention. The figure shows that several STBs (Set Top Boxes) 10 are connected to a gateway 11. Each of the gateways 11 is connected to a DSLAM 12 (Digital Subscriber Line Access Multiplexer). Each DSLAM is in turn connected to a network 13. To the network are also connected an anomaly collector server 14 and an audio/video/data server 15.

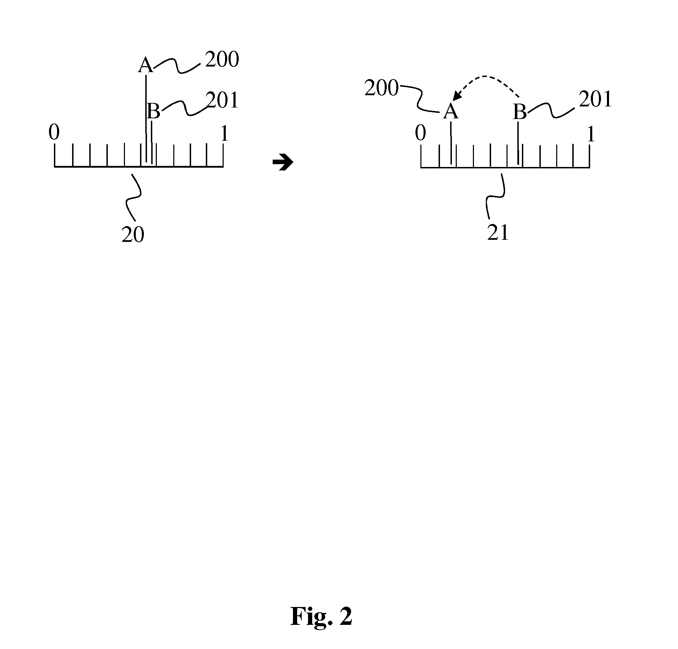

**Figure 2** is an illustration of a monitoring of quality metrics, executed individually by devices that are part of an audio/video/data processing system, such as for example by devices 10, 11 or 12 of figure 1. Audio/video/data services (for example: a television reception service received from device 15) are monitored by these devices. Such monitoring of the quality metrics can be represented as a line, where 0 represents a minimum quality and 1 represents a maximum quality. An anomaly is detected by the device only if a quality metrics between a first and a second measurement evolves beyond a determined threshold 'm', m being for example 0.3. Reference 20 represents such a quality metrics measurement for one device, a measurement done at t_i (reference A, or 200) and a measurement done at t_i+j (reference B, or 201). The parameter 'n' is a parameter indicating a delay, also referred to as time slot, for example 1 hour, or 10 minutes, and determines the monitoring frequency of the quality metrics. Paremeters i and j are instants within delay n. Reference 21 represents a scenario for evolution of the quality metrics for the device between t_i+n and t_i+2n. Between t_i and t_i+n, reference 20, the quality metrics evolves only slightly - below the threshold m and thus insufficiently to trigger a detection of an anomaly. At t_i+2n, according to scenario 21, the device experiences a quality metrics change that exceeds the threshold. Parameters n and m can for example initially be set by the operator and then adjusted by the device. For example, while the operator sets initially parameter n to 1 hour, the device can adjust the parameter to a shorter delay, for example to 10 minutes, if the device detected an anomaly.

Different parameters of m may exist for different types of services; for example if the quality metrics measurement concerns a number of lost packets received, the number of lost packets that would be acceptable without creating any visible or audible artifact will be higher for a service that comprises error correction codes, than one that does not contain error correction codes.

If the device detected an anomaly due to the different values of quality metrics measured within delay n exceeding threshold m, it transmits an anomaly detection message to an anomaly collector server, such as device 14 of figure 1. As parameters, the message comprises an identifier of the device (e.g. an IP address), the first measurement, and the second measurement done within delay n. If multiple services are monitored or in general to be able to distinguish the service that has been monitored the message additionally comprises a service identifier (e.g. a triplet DVB). The anomaly collector server 14 (also referred to as 'collector') collects the received anomaly detection messages and processes them in order to detect isolated and non-isolated anomalies. If many devices experience a same evolution in quality metrics, the evolution is not isolated (or 'global') and will rather be due to a change occurring in the network or due to a massive system fault, as for instance a buggy software update.

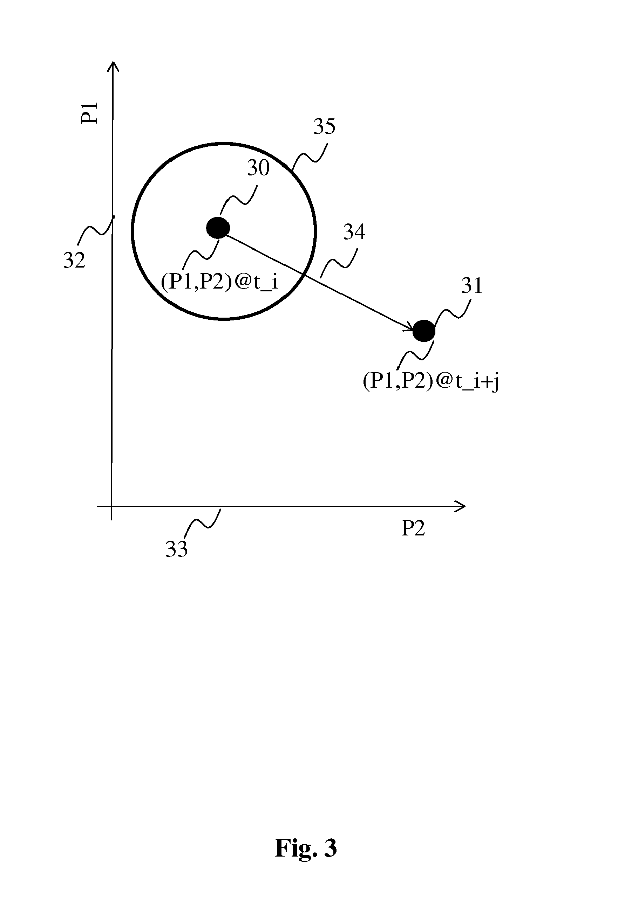

**Figure 3** is a visual representation of quality metrics evolution over time within a time slot. Axis 32 represents quality metrics parameter P1. Axis 33 represents quality metrics parameter P2. Point 30 represents a first measure of a set of quality metrics parameters, done by one of the data processing devices in the network at instant t_i upon detection of an anomaly by the data processing device. This first measurement has coordinates (P1, P2)@t_i. Point 31 represents a second measure of the same set of quality metrics parameters, done at instant t_i+j with coordinates (P1, P2)@t_i+j received from the device. i and j are instants within delay n. Arrow 34 represents the evolution of the quality metrics parameter values between the first and the second measurement. Circle 35 with diameter m represents threshold m. The reader will understand that the set of parameters of quality metrics parameters in each measurement can comprise more than two parameters, such as 3, 4, 5 or 10 or 100 parameters. Therefore, the set of parameters can be referred to as being P1 to Pn, where n is the number of parameters. For reasons of simplicity of explanation, the number of parameters is set to two in the further explanation of the invention.

The collector stores the first and the second measurements in a spatial access data structure (SADS) according to their coordinates, such as an R-tree, an R*-tree or an X-tree in order to be able to operate spatial queries on the collected data, and can determine if the collected anomaly messages correspond to isolated anomalies or not. It is assumed that the reader is familiar with spatial access structures, and these are not further explained here. In the following, an example implementation is discussed that is based on an R-tree data structure. At each end of a time slot, the collector does the previously discussed determination, before deleting the constructed R-tree so that it is ready to construct a new one for the next time slot.

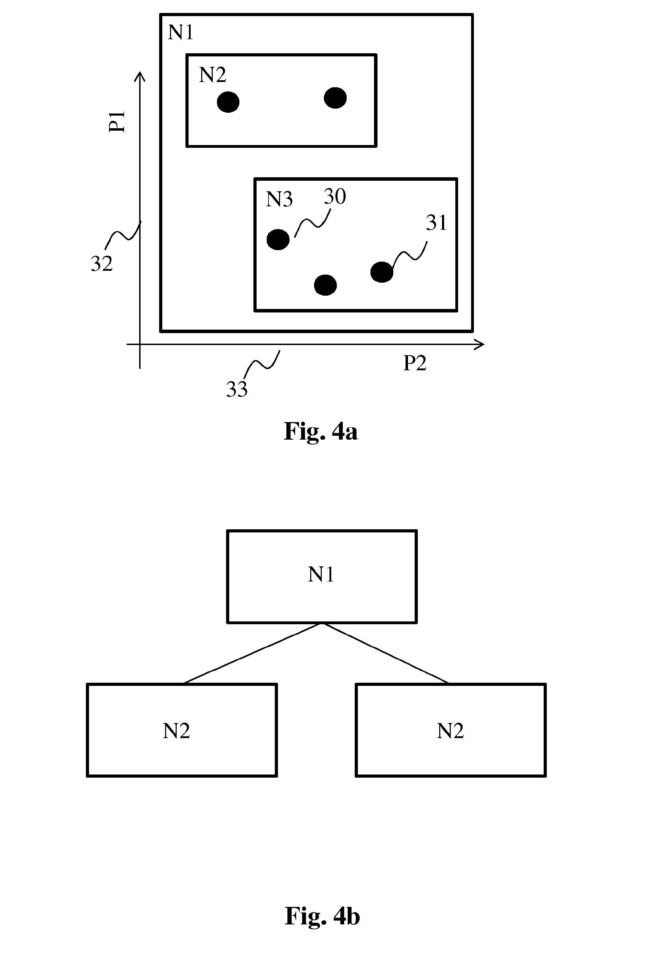

**Figures 4a** and **b** further illustrate how the R-tree is constructed from the incoming anomaly messages. Upon each received anomaly message, the collector calls the insert method of the R-tree. According to prior art, the insertion of a point (P1,P2) (= spatial object) in an R-tree is done, by starting at the root of the tree, and explore it to find a leaf node that covers the area where the point is to be inserted. If the leaf has enough room (i.e. the number of points is limited to a predefined maximum), the point is inserted. Otherwise, the leaf is split by calling a SplitNode method. Then, two new leafs are created, and the points are distributed between the two new leafs. In the beginning after reinitialization of the R-tree data structure, this results of course in the creation of only one node in the R-tree (N1) upon receipt of a first anomaly message. Figure 4a illustrates this process. As an example, the maximum number of points in a leaf is set to 3. It can be seen that the R-tree now contains a root N1, and two leafs, N2 and N3. Figure 4b shows a non-spatial representation of the R-tree of figure 4a. Each node stores the P1,P2 coordinates of the points that it contains.

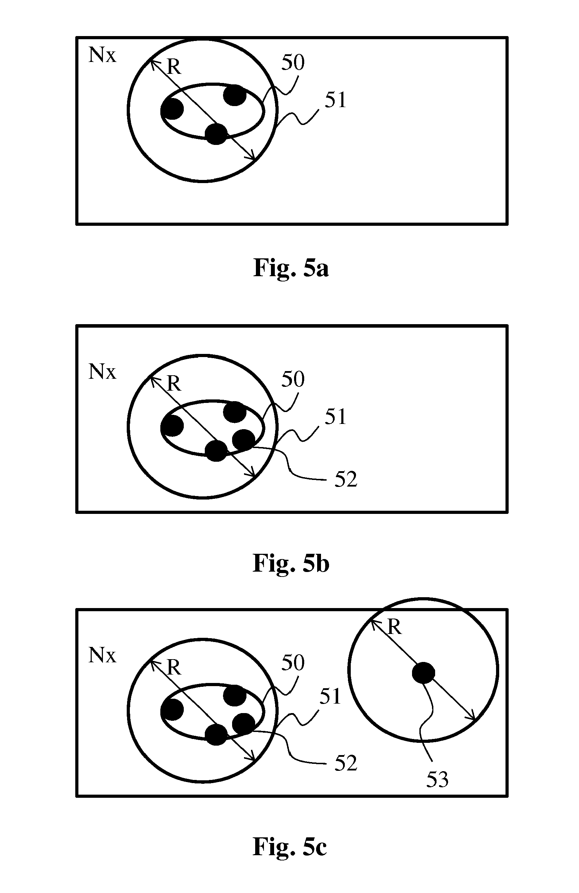

According to the invention, the prior-art insert method of the R-tree is modified, in order to add a computation of a minimum number of "balls" (other terms could be "spheres" or "circles", depending on the number of dimensions) of a radius R that can contain groups of points in a leaf. This is explained with the help of **Figures 5a, 5b** and **5c****.** In figure 5a, a node Nx comprises 3 points. Upon insertion of a point, the collector computes a convex hull 50, which must not grow larger than a ball 51 of a radius R. Each point must be in at least one ball. According to the example of figure 5b, the ball is still large enough to be able to contain the convex hull that is computed upon insertion of a new point 52. But for point 53, see figure 5c, a new ball is created.

According to the invention, the insert method of the R-tree is further modified to invoke the SplitNode method not when the number of points in a node exceeds a predefined maximum number of points per node, but when the number of balls per node exceeds a maximum number of balls per node, i.e. according to a predefined parameter, that we refer to as B. Indeed, it is interesting to keep many points within a leaf, especially if they lie within a same ball or in a few balls, this allows to classify these points as global (= not isolated) as will be explained further on. According to the invention, the SplitNode procedure stops when it is not able to output two leafs that each comprise at least the size of a ball of radius R, in other words, the area covered by a leaf is at least as large as the area of a ball of radius R.

Then, at the end of the time slot, i.e. at t_i+xn+epsilon, (epsilon being a delay to close the time slot and to be sure that there was enough time for all devices to transmit their anomaly messages to the collector) the collector has received all anomaly messages that occurred during the time slot. Now, the collector uses the constructed R-tree to classify the received anomalies into isolated, global or undecidable anomalies. To do so, the collector inspects the leafs of the R-tree (i.e. the nodes that do not have any descendant), for example nodes N2 and N3 of figure 4b. This final decision is made by the collector as follows:

For balls in the inspected leaf node that are not overlapping, two cases apply:
- For any such ball that contains more than T points, the devices that correspond to those points are classified as having experienced a global anomaly.
- For any such ball that contains less than or equal to T points, the devices that correspond to those points are classified as having experienced an isolated anomaly.

For balls in the inspected leaf node that overlap, two possible decisions apply:
- The situation is considered to be undecidable. A default policy is to decide that devices that correspond to the points in the overlapping balls are classified as having experienced an isolated anomaly. This avoids so-called false negatives.
   OR
- According to a variant embodiment, the devices that correspond to the points that fall in the overlapping balls are classified as having experienced an isolated anomaly if they are less or equal than T points; if they are more than T points, they are classified as being undecidable.

When the anomalies have been classified, a report resuming the isolated anomaly(ies) and the concerned device(s) can be transmitted to a maintenance server or to the operator, in order to further investigate the source of the anomaly(ies) and take measures if needed. According to a further analysis of the causes of the anomaly, possible measures are adding of ECC, replacement of a software version in the device, replacement of a card in a DSLAM, or placing a telephone call to a subscriber, requesting him to return a device to the nearby shop for replacement. As the invention makes it possible to detect isolated anomalies even before they can be detected by a subscriber, this allows taking preventive actions (such as correction of a software bug, etc).

An advantage of the method of the invention is that the decision to classify anomalies in each of the categories (isolated, global, undecidable) is made at the end of each time slot, whereas the construction of the R-rtree data structure and the computing steps explained with the help of figures 5a-c are made for each received anomaly message. According to a variant embodiment, the transmission of anomaly messages is spaced out over time, so that the collector does not receive all anomaly messages in a burst, and can space out the discussed computing steps over time. The discussed delay epsilon (i.e. the delay to close the time slot) can be used for this.

According to a variant embodiment of the centralized collector architecture depicted in figure 1, the invention can also be implemented in a decentralized way according to a peer-to-peer (P2P) architecture, where each seed reports anomaly events to a micro zone collector, and the micro zone collectors report to a macro zone collector. Such a solution is between a fully centralized solution and a fully decentralized solution.

With regard to parameters R and T, these can be set as follows: considering a video service with a million users. In the case of MOS (mean opinion score), that returns values based on the quality metrics of the video currently played, the scale of values is 1 to 5 (integers). As those values are produced very quickly, they should be averaged over a time window to be able to make a decision based on them. As a good score would be between 4.0 and 4.5, a value for the radius R of 0.3 seems reasonable, as it spans over users that experience close satisfaction in their video consumption. According to a combinable variant embodiment, R is tuned to particular service of which the quality metrics measurement is done; an example is given above with regard to a difference in sensibility to packet loss for a service with or a service without ECC (Error Correction Codes); another example is an H. 264 encoded HDTV service, that is more sensitive to packet loss than an MPEG2 encoded SDTV service.

Regarding parameter T, considering for example a DSLAM encountering performance troubles; typically a DSLAM has electronic cards with each 24 ports for a same number of users. For a DSLAM equipped with 8 cards, this gives 192 impacted users. Thus a T with a value of 200 is a good value for detecting isolated anomalies in a million user service, that allow a detection of errors occurring on the level of a card of a DSLAM.

According to a variant embodiment, the beginning and end of a time slot is determined by the devices based on a common clock shared with the collector device. This is advantageous for synchronization of the described operations.

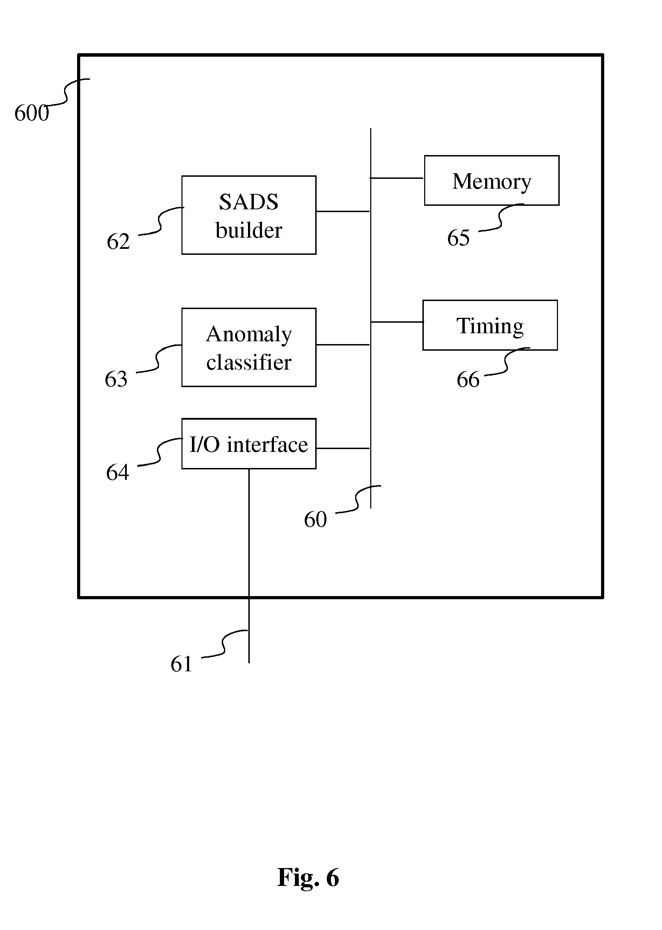

**Figure 6** shows a device 600 that can be used in a system that implements the method of the invention. The device comprises the following components, interconnected by a digital data- and address bus 60:
- A spatial access data structure (SADS) builder 62;
- an anomaly classifier 63;
- a memory 65 ;
- a I/O interface 64, for interconnection of device 600 to other devices connected in a network via connection 61;
- a timing module 66 for timing purposes and internal coordination of the components of the device.

Anomaly classifier 63 and SADS builder 62 can be implemented as a microprocessor, a custom chip, a dedicated (micro-) controller, and so on. Memory 65 can be implemented in any form of volatile and/or non-volatile memory, such as a RAM (Random Access Memory), hard disk drive, non-volatile random-access memory, EPROM (Erasable Programmable ROM), and so on. Device 600 is suited for implementing a data processing device according to the method of the invention. The data processing device 600 has an interface 64 for reception of messages indicating an anomaly detection; a spatial access data structure inserter (SADS) 62 for building of an R-tree comprising a spatial representation of the anomaly messages received; and an anomaly classifier 63 for classification of received anomaly messages in at least one of isolated anomalies, global anomalies or undecidable anomalies.

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or according to another variant embodiment, as distinct electronic components integrated in a device or, according to yet another embodiment, in a form of a mix of hardware and software.

According to a particular embodiment, the anomaly message comprises a reason for the anomaly detection. This reason can then be stored in the SADS (for example, being represented by an error code number), so that an operator can intervene without interrogating the device for the anomaly reason.

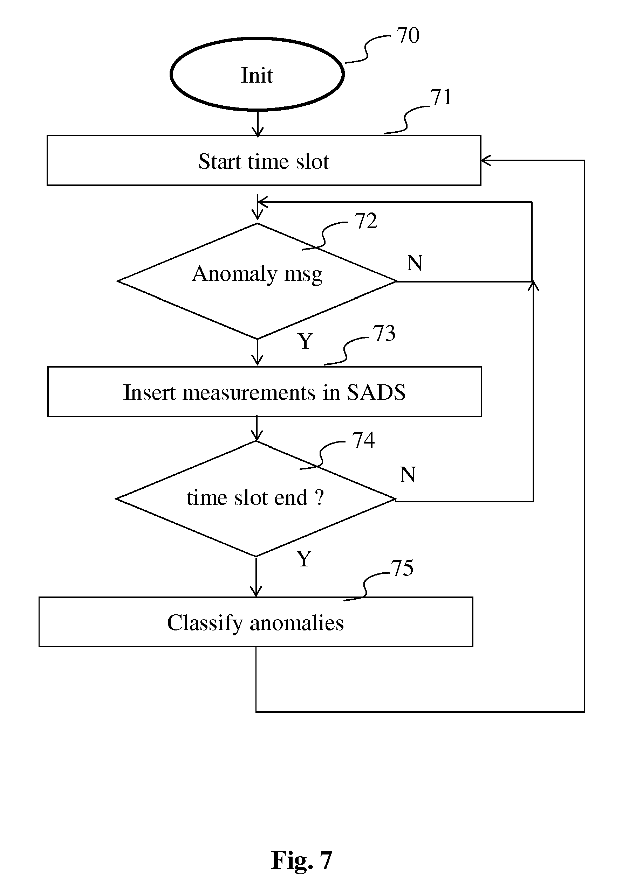

**Figure 7** shows a particular embodiment of the method according to the invention in the form of a flow chart.

In a first initialization step 70, any variables, counters and memory structures are initialized that are used during the execution of the method. In a step 71 a time slot is started, where the SADS (R-tree) is initialized. In a step 72, it is determined if an anomaly message is received. If such message is received, the method continues with step 73; if not, the method continues with waiting for an anomaly message in step 72. If an anomaly message is received, the point coordinates comprised in the anomaly message are inserted in a step 73 into the SADS, for example as previously discussed in an R-tree. In a step 74, it is determined if the time slot has ended. If not so, the method continues with step 72, where it waits for another anomaly message. If the time slot has come to an end, the anomalies are classified according to the discussed classification, and the method returns to step 71, where a next time slot is started.

## Claims

1. A method of detection of isolated anomaly in a plurality of data processing devices connected in a network, **characterized in that** the method comprises the steps of:
starting (71) a time slot;
ending said time slot after a predetermined duration;
receiving (72) anomaly messages from said data processing devices comprising a first measurement of a set of quality metrics parameters P1 to Pn measured at a first instant within said time slot and a second measurement of said set of quality metrics parameters P1 to Pn measured at a second instant within said time slot, said data processing devices transmitting said anomaly messages when a difference between said first measurement and said second measurement exceeds a predetermined threshold m;
inserting (73) said first measurement and said second measurement in a spatial access data structure, whereby P1 to Pn are spatial coordinates of insertion of said measurements as spatial objects in said spatial access data structure; and
upon time slot end (74), detection of isolated anomalies through classification (75) of said spatial objects inserted in said spatial access structure according to their spatial distribution.

2. The method according to claim 1, wherein said spatial access data structure is an rtree, and said insertion of a spatial object comprises:
a step of starting at a root of the rtree, to find a leaf node that covers a spatial area where said spatial object is to be inserted;
upon insertion of the spatial object in the leaf node found, computing of a convex hull that comprises spatial objects already present in the leaf node found, and that includes the spatial object to insert;
if the computed convex hull does not fit in a ball with a predetermined radius R, creation of a new ball for the spatial object to insert, having as a center the spatial object to insert;
if a number of balls in the leaf node found exceeds a predetermined number of balls per node, splitting of the leaf node found in two leaf nodes, so that each of said two leaf nodes covers a spatial area that comprises a number of balls that does not exceed said predetermined number of balls per node.

3. The method according to claim 1, wherein said step of detection of isolated anomalies comprises:
determining, for each leaf node, if there are balls in the leaf node that are not overlapping;
for any non-overlapping ball that contains less or equal than a predetermined number T of spatial objects, any spatial object in said non-overlapping ball corresponds to an isolated anomaly.

4. The method according to claim 3, wherein said step of detection of isolated anomalies comprises:
determining, for each leaf node, if there are balls in the leaf node that are overlapping;
for any ball belonging to a group constituted by overlapping balls) that contains less or equal than a predetermined number T of spatial objects, any spatial object in said ball corresponds to an isolated anomaly.

5. The method according to any of claims 1 to 4, comprising a step of deletion of the constructed spatial access data structure after said detection of isolated anomalies.

6. The method according to any of claims 1 to 5, comprising a step of transmitting a report to a maintenance server or to an operator, resuming any detected isolated anomalies.

7. The method according to any of claims 1 to 6, wherein said threshold m is determined as a function of a type of a service for which said set of quality metrics parameters is determined.

8. The method according to any of claims 1 to 7, wherein said radius R is determined as a function of a type of a service for which said set of quality metrics parameters is determined.

9. The method according to any of claims 1 to 8, wherein said first and said second instant within said time slot is determined by each of said data processing devices based on a common clock shared between the data processing devices and a device implementing said method.

10. The method according to claim 1, wherein said spatial access data structure is an R*-tree.

11. The method according to claim 1, wherein said spatial access data structure is an X-tree.

12. Device for detection of isolated anomaly in a plurality of data processing devices connected in a network, **characterized in that** the device comprises the following means:
a timing module (66) for starting a time slot and for ending said time slot;
an input/output interface (64) for receiving anomaly messages from said data processing devices comprising a first measurement of a set of quality metrics parameters P1 to Pn measured at a first instant within said time slot and a second measurement of said set of quality metrics parameters P1 to Pn measured at a second instant within said time slot, said data processing devices transmitting said anomaly messages when a difference between said first measurement and said second measurement exceeds a predetermined threshold m;
an inserter (62) for inserting said first measurement and said second measurement in a spatial access data structure, whereby P1 to Pn are spatial coordinates of insertion of said measurements as spatial objects in said spatial access data structure; and
an anomaly classifier module (63) for detection upon time slot end, of isolated anomalies through classification of said spatial objects inserted into said spatial access structure according to their spatial distribution.
